# EUROPEAN PATENT SPECIFICATION

(11) **EP 2 210 794 B1**
(45) Date of publication and mention of the grant of the patent: **18.09.2013**
(21) Application number: 09154533.5
(22) Date of filing: 06.03.2009
(51) Int. Cl.: B62B 9/08, B62B 5/04

(54) **Buggy provided with a braking mechanism**
Buggy mit einem Bremsmechanismus
Buggy équipé d'un mécanisme de freinage

(30) Priority: 23.01.2009 US 146661 P
(43) Date of publication of application: 28.07.2010
(73) Proprietor: Nuna International B.V., 1105 BJ Amsterdam (NL)
(72) Inventor: van Petegem, Fiona, 1105 BJ Amsterdam (NL); Biermann, Eric, 1105 BJ Amsterdam (NL); van Oosterum, Sander, 1105 BJ Amsterdam (NL); Baas, Erik, 1105 BJ Amsterdam (NL); Peters, Aukje, 1105 BJ Amsterdam (NL)
(74) Representative: Vernout, Robert

(56) References cited:
- EP-A1- 0 633 178
- WO-A1-2007/053018
- GB-A- 2 434 419
- US-A- 1 331 513
- US-A- 5 460 399
- US-A1- 2007 051 565
- US-B1- 6 170 615
- US-B1- 6 341 672

## Description

The current invention relates to a buggy in accordance with the preamble of claim 1. Such a buggy is described in US 5,460,399, which discloses all the features of the preamble of claim 1.

A buggy or a stroller for transporting a child normally comprises at least three wheels which are interconnected by a frame. The wheels are usually connected to the frame using suitable axles allowing rotation of said wheels with as little friction as possible. A buggy is additionally provided with a seat assembly to comfortably hold the child. A stroller is usually furthermore provided with push bars allowing the stroller to be pushed.

For instance when placing the child in the seat assembly, it is favourable when the stroller is provided with a brake. Limiting the rotation of at least one of the wheels, preferably two, prevents the stroller from rolling backward due to the force in the backward direction when placing the child in the seat. Also in other circumstances a braking mechanism comes in hand, for instance on sloping surfaces or simply for preventing any movement of the stroller.

In the known buggies, the braking mechanism can be moved between a free position wherein the wheel is allowed to rotate and a braking position wherein at least one of the wheels is locked, preventing any substantial movement of the stroller. Known braking mechanisms include clamping means which engage the outer surface of the wheel. Such a mechanism is hard to move to the braking position due to the strong clamping action of the clamping means on the wheel. It is an object of the invention to provide a buggy with a compact, easy to use and/or efficient braking mechanism.

In order to accomplish that objective, a stroller in accordance with claim 1 is provided.

By inserting a braking rod in a recess provided in the wheel, the rotation of said wheel is limited which results in a firm braking action. In order to unlock the wheel, the braking mechanism is moved toward the free position and the braking rod is taken out of the recess, allowing rotation of the wheel. The first end of the braking rod extends at a distance from the wheel in this free position. Preferably the wheel is provided with a plurality of recesses or holes allowing a braking action substantially regardless of the orientation of the wheel.

Preferably the braking rod is moveable in a direction substantially parallel to the axis of the wheel. This allows a compact composition. The recess hereby extends on the wheel on a radial location with respect to the axle of said wheel. More preferably the wheel is provided with a radially extending ring of recesses at a distance from to the axle in order to receive the braking rod in substantially all positions of the wheel.

The braking mechanism comprises a moving member for moving the braking rod between the positions, wherein the moving member comprises an engaging surface oriented oblique to the axis of the braking rod for engaging the second end of the braking rod. When moving the moving member, the second end of the braking rod is guided over the engaging surface, the braking rod is moved in the direction of the longitudinal axis of the braking rod. By moving the moving member, the braking rod can therefore be moved in and out of the recess provided in the wheel, moving the braking mechanism between the free and the braking position.

By providing an engaging surface under an angle with respect to the longitudinal axis of the braking rod, the distance between the wheel and said engaging surface along said axis of the braking rod can be changed by moving said surface relative to the rod. Preferably the moving member has a wedge shaped surface which providing a varying distance to the wheel. By shifting the moving member, the braking rod is movable preferably in a direction parallel to the axle of the wheel.

When the braking mechanism is in the free position, the braking rod extends against the engaging surface on a location distant from the wheel such that the braking rod extends at a distance away from the wheel. By moving the moving member, the engaging surface is moved with respect to the rod. When the second end of the rod is moved to another part of the engaging surface closer to the wheel, the braking rod moves toward the wheel and eventually locks said wheel in the braking position.

Preferably the engaging surface comprises a recess for receiving the second end of the braking rod in the braking position. This locks the braking rod on the engaging surface in the braking position preventing the buggy to accidentally move from the braking position to the free position. By applying a suitable amount of force on the moving member, the braking rod can slip out the recess, allowing a movement to the free position.

The braking mechanism according to the invention further comprises a pedal for moving the moving member, wherein the pedal is moveable with respect to the moving member. This allows a degree of freedom of the pedal with respect to the moving member. The pedal can for instance be manipulated by foot and is used to move the moving member from the braking to the free position and vice versa.

The pedal is moveable between a free position wherein the braking mechanism is in the free position, and first and second braking positions wherein the braking mechanism is in the braking position. Since the pedal is moveable with respect to the moving member, the pedal has two braking positions, while the moving member has only one braking position. The pedal is preferably moveable between the first and second braking positions without substantially moving the moving member.

More preferably, the pedal is biased towards the second braking position. When the pedal is moved from the free position to the first braking position, the moving member is moved from the free to the braking position too. When for instance the foot is released, the pedal is automatically biased towards the second braking position. Preferably a spring is arranged to move the pedal with respect to the moving member towards the second braking position of said pedal. This would result in an automatically movement from the braking position to the free position when the pedal is not manipulated due to the biasing. However, when the moving member is in the braking position, the braking rod is preferably received in the recess provided in the engaging surface, preventing any movement of the moving member. This also limits the movement of the pedal. When the braking rod is removed from said recess in said surface, the moving member is free to move and due to the biasing action of the pedal the braking mechanism is moved towards the free position.

According to a preferred embodiment of the buggy according to the invention, movement of the pedal from the free position in a first direction to the first braking position moves the moving member from the free to the braking position, wherein movement of the pedal in a second direction moves the pedal from the first to the second braking position, and wherein further movement of the pedal from the second braking position in the second direction moves the pedal to the free position, moving the moving member from the braking position to the free position. And preferably the pedal is biased towards the second direction. More preferably a spring member is provided to force the pedal in the second direction.

The pedal is therefore preferably moveable between a first position with respect to the moving member and a second position with respect to the moving member. When the pedal is moved in the first direction when the pedal is the first position with respect to the moving member, the moving member is moved in the first direction. When the pedal is however moved in the second direction from the first position, the pedal will first move to the second position with respect to the moving member before moving the moving member in the second direction.

Preferably, when the moving member is in the free position, the pedal is only allowed in the first position with respect to the moving member. This ensures movement of the moving member in the first direction when the pedal is moved in the first direction. Preferably, when the pedal is in the free position, the pedal is thus not allowed to move with respect to the moving member. The pedal can hereto for instance be limited in movement by the frame. This ensures that the biasing force in the second direction does not move the pedal further in the second direction when the moving member is in the free position. Otherwise, when using the brake for the buggy, the pedal would be allowed to move in the first direction without moving the moving member, resulting in no braking action.

Since the pedal is biased in the second direction, the pedal will automatically move from the first to the second position with respect to the moving member when not being manipulated. When the moving member is not restricted to move, for instance by the rod extending in the recess, the moving member will therefore also move in the second direction towards the free position of the braking mechanism.

It is in particular advantageously when the pedal is moveable between a free position wherein the braking rod is free from the wheel and a first braking position wherein the pedal is in the first position with respect to the moving member and a second braking position wherein the pedal is biased in the second position with respect to the moving member. The pedal hereby has three orientations, a free and two braking position, wherein the pedal will automatically move from the first to the second braking position when the pedal is released.

According to a further preferred embodiment of the buggy according to the invention the moving member is rotatable around a rotation axis parallel to the axis of the braking rod, wherein the engaging surface extends on a radial location with respect to the rotation axis. By rotating the moving member the engaging surface is moved with respect to the second end of the braking rod, moving said rod in a direction along its longitudinal axis. Dependent on the angle of rotation of the moving member around the rotation axis, the braking rod is moved.

Preferably the pedal is rotatable around the rotation axis of the moving member. In this configuration, the moving member and the pedal rotate around the same axis, resulting in an efficient angular movement between the two. Since the pedal is preferably biased towards the second direction, a torsion spring is provided.

More preferably, the pedal is substantially flush with the frame in the second braking position of the pedal; that is the second position of the pedal with respect to the moving member in the braking position. More preferably, the frame is provided with a housing, wherein the pedal is substantially flush with said housing in the second braking position of the pedal. Even more preferably the housing forms a substantially horizontal board, wherein the pedal is substantially flush with said board.

It is furthermore advantageously when the rotation axis is formed by the axle of the wheel. This results in a compact and efficient composition and renders the need for an additional shaft as rotation axis obsolete.

According to a further preferred embodiment of the buggy the first direction comprises a component in the downward direction and wherein the second direction comprises component in the upward direction.

According to a further preferred embodiment the buggy comprises a pedal for moving the braking mechanism wherein the pedal is moveable between a free position and first and second braking positions, wherein in the free position the braking mechanism is in the free position and the pedal at least partially extends above the plane of the frame, wherein in the first braking position the braking mechanism is in the braking position and wherein the pedal at least partially extends under the plane of the frame, and wherein in the second braking position the pedal is substantially flush with the frame of the buggy.

The working of a highly preferred embodiment of the invention is as follows. When the braking mechanism is in the free position, a radial end of the pedal with respect to the rotation axis preferably extends upwardly with respect to the frame. When being unloaded, the pedal is limited such that the pedal in the first position with respect to the moving member. When the pedal would not be limited, the pedal would be biased towards the second position with respect to the moving member. By pressing the pedal downwards, the pedal will rotate in the first direction. This also rotates the moving member in the first direction. Due to the engaging surface, the first end of the braking rod is moved from a distance from the wheel into the recess provided in the wheel, limiting rotation thereof. At the same time, the second end of the braking rod is received in the recess in the engaging surface, limiting rotation of the moving member when in the braking position.

When the pedal is released, the biasing means will rotate the pedal upwardly from the first to the second position with respect to the moving member. Since the moving member is restricted from rotating due to the rod extending in the recess, the pedal will not rotate the moving member further in the second, upward direction towards the free position.

In this position, the second braking position, the pedal is substantially flush with the frame. By applying upward pressure on the pedal, for instance by placing a foot under said panel, the second end of the braking rod is released from the recess in the engaging surface. The moving member is now free to rotate and due to the biasing means provided on the pedal, the moving means will rotate with the pedal, moving the braking mechanism in the free position. The movement of the pedal is limited such that when the moving member is in the free position, the pedal is in the first position with respect to the moving member.

The movement of the pedal from the first to the second braking position allows easy manipulation of the pedal since the pedal is then substantially flush with the board, or at least extends more in the second direction with respect to the first braking position.

According to a further preferred embodiment of the buggy according to the invention the braking rod comprises a returning spring member for returning the braking rod from the braking position to the free position. This allows automatically movement of the braking rod towards the free position when moving member moves towards the free position. The spring member is preferably arranged between the frame and the braking rod, biasing the rod away from the wheel.

It is furthermore preferably when the braking rod provided with the returning spring engages the engaging surface, the moving member is moved towards its free position. The moving member then moves the pedal in the second direction as mentioned above. The returning spring provided in the braking rod hereby functions as biasing means for the pedal.

According to a further preferred embodiment of the buggy the braking rod comprises an aligning spring member, wherein the aligning spring member is arranged to compress when the braking rod is moved from the free to the braking position when the rod is not aligned with the recess provided in the wheel. When the braking rod is not correctly aligned with a recess provided in the wheel, the aligning spring member of the braking rod will build up tension. This will result in a proper introduction of the first end when the wheel is slightly moved aligning the rod and the recess.

The spring members further facilitate the movement of the second end of braking rod to out of the recess provided in the engaging surface when moving from the braking position to the free position. The stiffness of the spring member can be adjusted to the preferred force needed to unlock the wheel by foot.

The present invention is further illustrated by the following Figures, which show a preferred embodiment of the device according to the invention, and are not intended to limit the scope of the invention in any way, wherein:
- Figures 1a and 1b schematically show the buggy in the free and the braking position respectively;
- Figure 2a schematically shows the braking mechanism according to the invention;
- Figure 2b shows the mechanism from figure 2a in exploded view;
- Figures 3 - 6 schematically show the braking mechanism in various stages;
- Figures 7a and 7b schematically show the moving member in cross section,
- Figures 8a and 8b schematically show the relationship between the pedal and the moving member in cross section, and;
- Figure 9 schematically shows the buggy according to the invention.

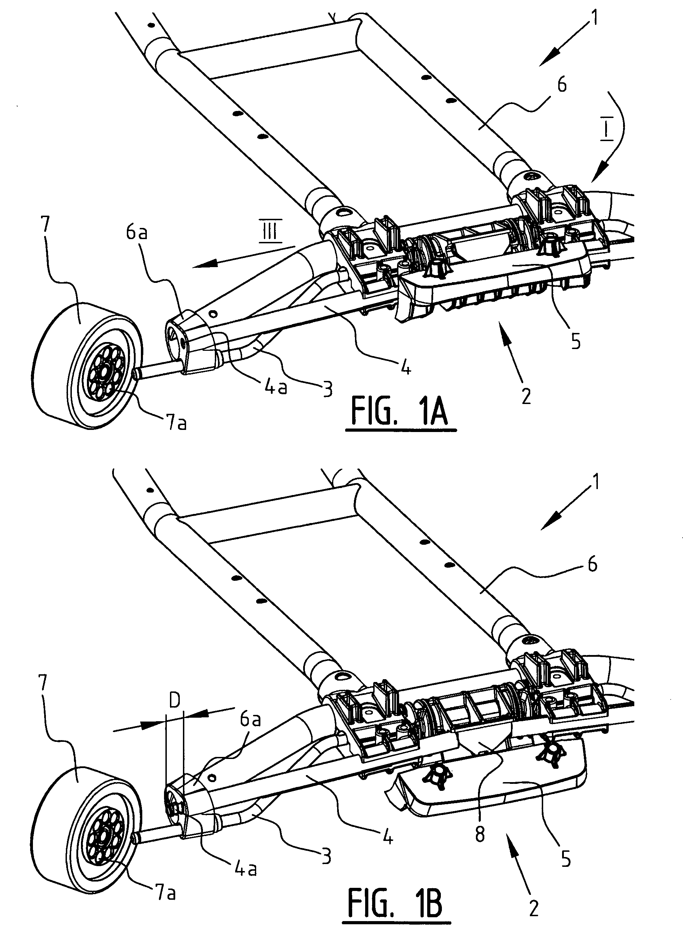

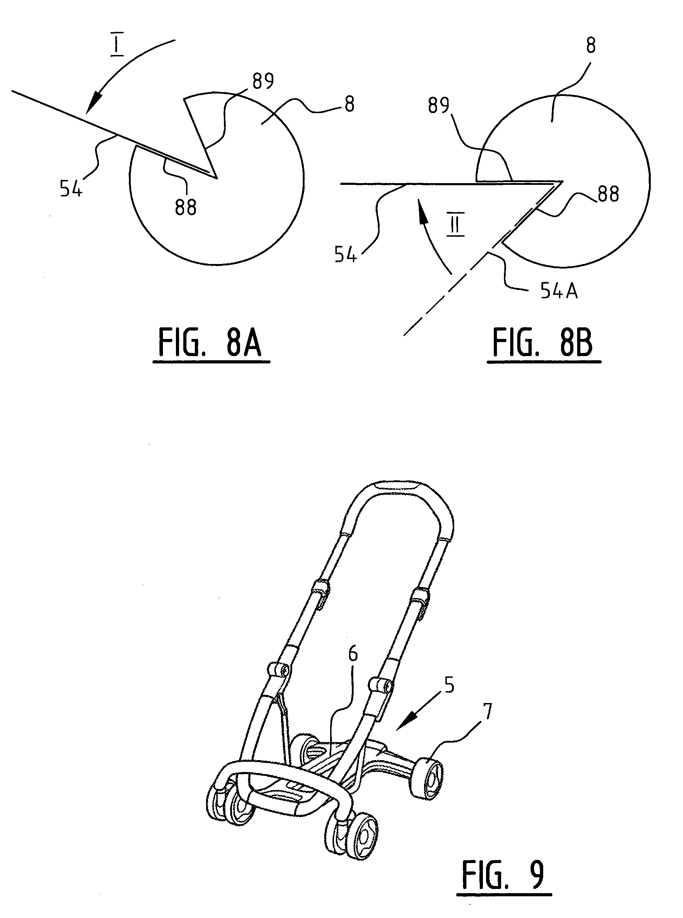

In figures 9, 1a and 1b, a buggy 1 according to the invention is shown. The buggy 1 comprises a frame 6 on which a seating assembly is mounted (not shown) between push bars. The buggy 1 is provided with four wheels whereby the rear wheels 7 are provided with a braking mechanism 2. For the sake of clarity, the wheel 7 is shown in disconnected state in figures 1a and 1b. The braking mechanism 2 is arranged to move the wheels 7 between a free position wherein the wheels can rotate around the axles 3 and a braking position wherein rotation of the wheels 7 is prevented.

In order to provide an efficient braking mechanism 2, a braking rod 4 is provided to move in a direction indicated with III in figure 1a. In figure 1a the braking mechanism 2 is in the free position wherein a first end 4a of the braking rod 4 is free from the wheel 7 and extends at a distance thereof. When the braking mechanism 2 is operated, the braking rod 4 moves in a direction indicated with III and the first end 4a of the braking rod 4 will extend at a distance D from the wheelbase 6a as shown in figure 1b which shows the buggy in the braking position. The first end 4a will be received in a recess 7a provided in the wheel 7 limiting rotation thereof. As is shown in figures 1a and 1b, the wheel 7 is provided with a plurality of recesses surround the axle 3.

To move the braking mechanism 2 between the free position and the braking position, a pedal 5 is provided which is operable connected to a moving member in form of a wedge 8 as will be explained more in detail below. The pedal 5 is arranged to be pressed in a direction indicated with I in figure 1a, the buggy is moved from the free position as shown in figure 1a to the braking position as shown in figure 1b.

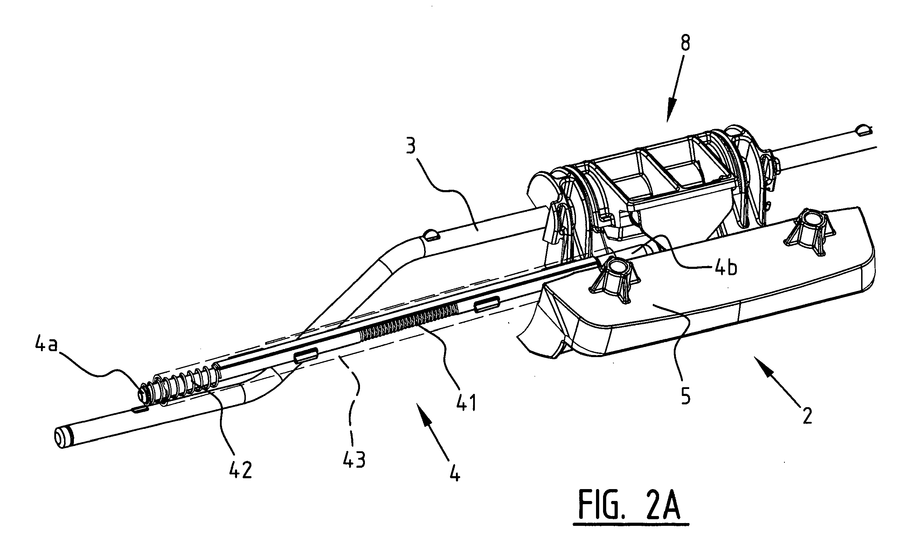

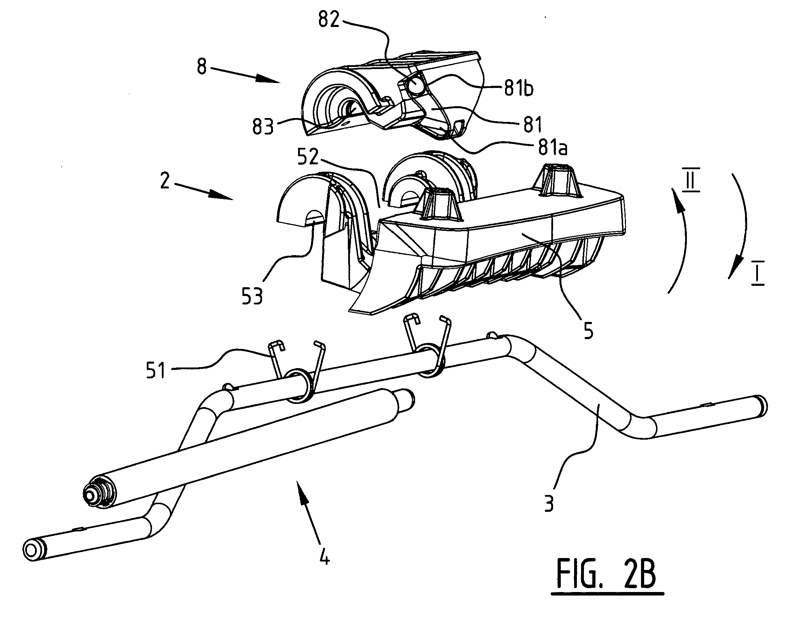

In figures 2a and 2b the braking mechanism 2 according to the invention is shown in more detail. The braking mechanism 2 comprises a pedal 5 which is rotatable with respect to a moving member in the form of a wedge 8. The wedge 8 is received in a recess 52 of the pedal 5. The wedge 8 and the pedal 5 rotate respectively around the shaft 3 which forms the axles of the wheels 7. The pedal 5 and the wedge 8 are provided with suitable reception surfaces 53 and 83 to enable rotation around the axis formed by the shaft 3. The pedal 5 is provided with torsion springs 51 to bias the pedal 5 in a direction indicated with II in figure 2b.

The wedge 8 is provided with an engaging surface 81 which extends oblique with respect to the longitudinal axis of the braking rod 4. Said surface 81 is curved such that one end 81a extends at predetermined distance from the wheel 7 and a second end 81b extends closer to said wheel 7. When rotating the wedge 8, a second end 4b of the braking rod 4 is guided over the engaging surface 81 allowing movement of said rod 4 in the direction III. When the second end 4b of the rod 4 engages the surface near 81a, the braking mechanism is in the free position as shown in figure 1a. When the wedge is rotated in direction I, the second end 4b of the rod will be guided over surface 81 and will eventually engage the surface near 81b in the braking position as shown in figure 1b.

Near the end 81b, a recess 82 is provided in the engaging surface 81 to lock the braking rod 4 in the braking position. The rod 4 extending in the recess 82 will prevent the wedge 8 to rotate as will be explained more in detail below.

Also shown in more detail in figure 2a is the braking rod 4. The braking rod 4 comprises a housing in the form of a tube 43 which contains the various parts of the braking rod 4. Aligning spring 41 is provided to build up a pressure to the braking rod 4 when the first end 4a of the braking rod 4 is not correctly aligned with a recess 7a provided in the wheel 7 after moving the braking mechanism 2 to the braking position. When the wheel 7 is slightly rotated resulting in a correct alignment, the spring 41 forces the first end 4a in said recess 7a. Return spring 42 moves the rod 4 in a direction opposite to III when the mechanism is moved from the braking to the free position.

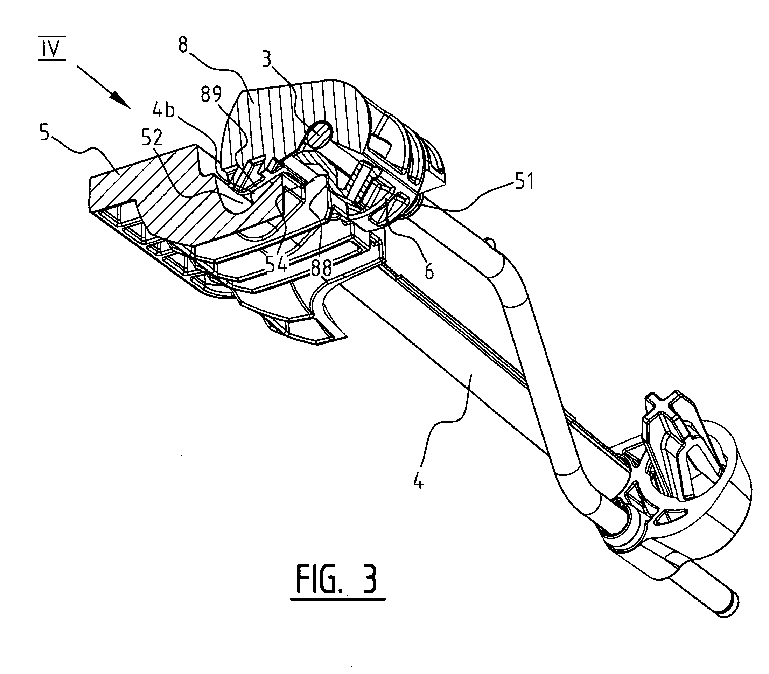

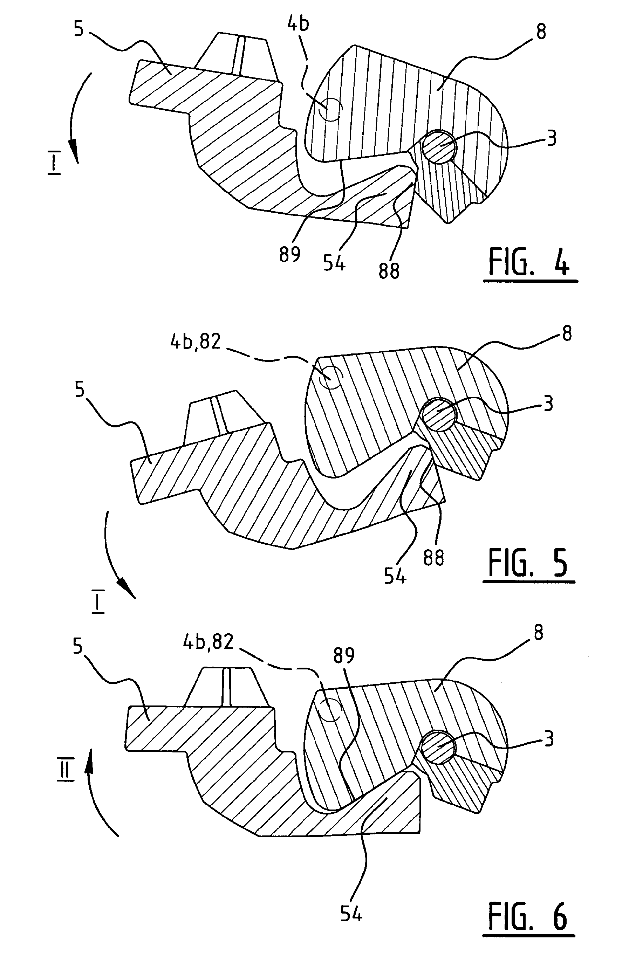

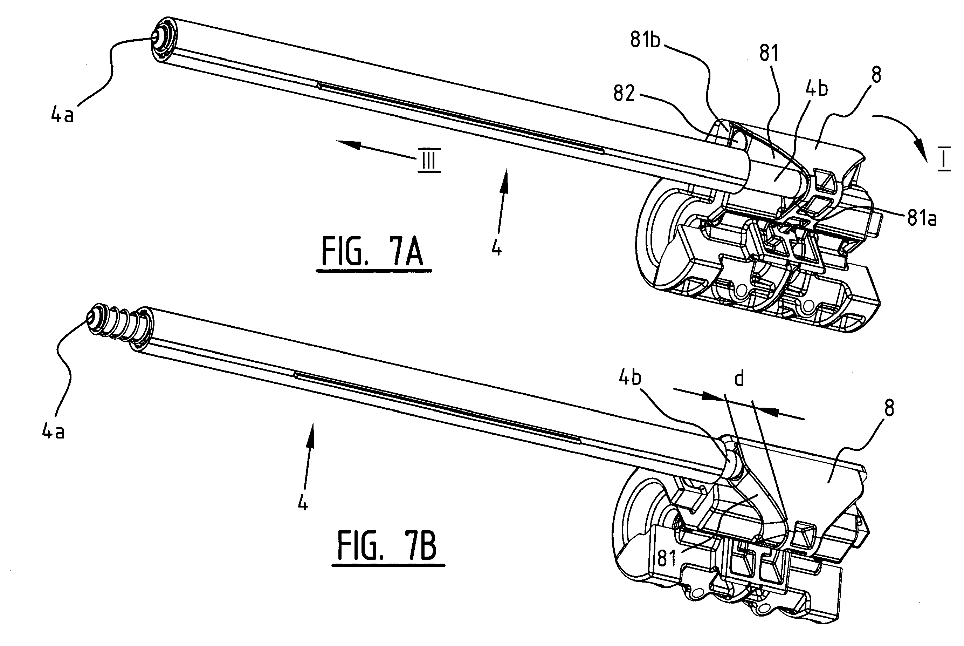

In the free position as shown for instance in figures 1a, 4 and 8a, the pedal 5 extends above the frame 6 of the buggy 1. This situation is also schematically shown in figure 7a. In this situation, the braking rod 4 extends at a distance from the wheel 7 and the second end 4b of the rod 4 engages the engaging surface 8 near the first end 81a as is more clearly visible in figure 4, which shows the wedge 8 in a direction indicated with IV in figure 3.

When force is exerted in a direction I, the pedal 5 will rotate around the axis 3 in a direction I. Since the pedal 5 engages the wedge 8 with protrusion 54 on a surface 88, also the wedge 8 will rotate in a direction I around axis 3. This situation is also shown in figure 8a wherein the protrusion 54 of the pedal 5 and the wedge 8 are schematically shown. The protrusion 54 engages a surface 88 resulting in a rotation in the direction I of the wedge 8 when the pedal 5 with the protrusion 54 is rotated in the direction I.

Due to the movement of the wedge 8 in the direction I, the second end 4b of the braking rod 4 will be moved in the direction III as is shown in figures 4 and 7a. Further movement of the pedal in direction I will eventually result in the situation as shown in figures 5 and 7b, wherein the second end 4b is received in the recess 82 provided in the engaging surface 81. As can be seen from figures 7b, the braking rod 4 is moved over a distance D towards the wheel 7. In this situation, the pedal 5 is in the first braking position as is further shown in figure 8b in dotted line 54a. The pedal 5 hereby extends under the plane of the frame 6.

When the force exerted on the pedal 5 is now released, the pedal 5 will rotate in the second direction indicated with II due to the torsion springs 51. Since the pedal 5 and the wedge 8 are arranged to move with respect to each other, the pedal 5 will first move from a first position to a second position with respect to the wedge 8. This is shown schematically in figure 8b wherein the pedal 5 indicated with 54a is in the first position and moves to the position indicated with 54 due to the torsion springs 51. The protrusion 54 of the pedal 5 now engages surface 89 of the wedge 8. In the second position, the pedal 5 is substantially flush with the rear end of the frame 6 as is further shown in figure 6. This is the second braking position of the pedal 5.

Due to the second end 4b of the rod 4 extends in the recess 82 of the engaging surface 81, the wedge 8 will not rotate in direction II due to the biasing force of the torsion spring 51. Only when sufficient force is applied on the pedal 5 in a direction II, the end 4b of the rod 4 will exit the recess 82 due to the compression of spring 42. The wedge 8 is now free to rotate and will return to the situation as indicated in figure 4 and 8a due to biased pedal 5.

The pedal 5 will not move further in the direction I with respect to the moving member 8, i.e. towards the second position as indicated in figure 8b since the pedal is restricted to move further than the position indicated in figure 4 and 8a.

It is also possible that the moving member 8 is biased in the second direction due to the returning force of returning spring 42. If the second end 4b is free from the recess 82, the second end 4b engages the engaging surface 81. This moves the moving member 8 in direction II. When the moving member 8 moves in the direction II, the pedal 5 will move towards the first position with respect to the moving member 8 as indicated with 54a in figure 8b. Further movement of the moving member 8 in direction II will then move the pedal 5 in the direction II, eventually resulting in the situation as indicated in figures 8a and 4.

The present invention is not limited to the embodiment shown, but extends also to other embodiments falling within the scope of the appended claims.

## Claims

1. Buggy (1) with a frame (6) and at least one wheel (7) provided with a braking mechanism (2), wherein the braking mechanism (2) is moveable between a free position wherein the wheel (7) is rotatable and a braking position wherein the rotation of the wheel (7) is limited, wherein the braking mechanism (2) comprises a braking rod (4) which is moveable between a free position wherein the braking rod (4) is free from the wheel (7) and a braking position wherein a first end of the braking rod (4) is received in a recess (82) provided in the wheel (7), limiting rotation thereof, wherein the braking mechanism (2) comprises a moving member (8) for moving the braking rod (4) between the positions, wherein the moving member (8) comprises an engaging surface oriented oblique to the longitudinal axis of the braking rod (4) for engaging the second end of the braking rod (4), wherein the braking mechanism (2) further comprises a pedal (5) for moving the moving member (8), **characterized in that** the pedal (5) is moveable with respect to the moving member (8), and **in that** the pedal (5) is moveable between a free position wherein the braking mechanism (2) is in the free position, and first and second braking positions wherein the braking mechanism (2) is in the braking position.

2. Buggy according to claim 1, wherein the braking rod comprises an aligning spring member (41), wherein the aligning spring member (41) is arranged to compress when the braking rod (4) is moved from the free to the braking position when the rod (4) is not aligned with the recess (82) provided in the wheel (7).

3. Buggy according to claim 2, wherein the aligning spring member (41) is arranged between two rod sections provided in the braking rod (4).

4. Buggy according to any of the preceding claims, wherein the engaging surface comprises a recess (82) for receiving the second end of the braking rod (4) in the braking position.

5. Buggy according to any of the preceding claim, wherein the pedal (7) is moveable between the first and second braking positions without substantially moving the moving member (8).

6. Buggy according to claim 5, wherein the pedal (7) is biased towards the second braking position.

7. Buggy according to any of the preceding claims, wherein movement of the pedal (7) from the free position in a first direction (I) to the first braking position moves the moving member (8) from the free to the braking position, wherein movement of the pedal (7) in a second direction (II) moves the pedal (7) from the first to the second braking position, and wherein further movement of the pedal (7) from the second braking position in the second direction moves the pedal (7) to the free position, moving the moving member (8) from the braking position to the free position.

8. Buggy according to any of the preceding claims, wherein the moving member (8) is rotatable around a rotation axis parallel to the axis of the braking rod (4), wherein the engaging surface extends on a radial location with respect to the rotation axis.

9. Buggy according to claim 8, wherein the pedal (7) is rotatable around the rotation axis of the moving member (8).

10. Buggy according to any of the preceding claims 7 to 9, wherein the first direction (I) comprises a component in the downward direction and wherein the second direction (II) comprises a component in the upward direction.

11. Buggy according to any of the preceding claims, wherein the pedal (7) is substantially flush with the frame (6) in the second braking position.

12. Buggy according to any of the preceding claims, wherein the braking rod (4) comprises a returning spring member (42) for returning the braking rod from the braking position to the free position.

## Patentansprüche

1. Buggy (1) mit einem Rahmen (6) und zumindest einem Rad (7), das mit einem Bremsmechanismus (2) versehen ist, wobei der Bremsmechanismus (2) zwischen einer freien Position, in der das Rad (7) drehbar ist, und einer Bremsposition, in der die Drehung des Rades (7) begrenzt ist, bewegbar ist, wobei der Bremsmechanismus (2) eine Bremsstange (4) umfasst, die zwischen einer freien Position, in der die Bremsstange (4) von dem Rad (7) frei ist, und einer Bremsposition, in der ein erstes Ende der Bremsstange (4) in einer Aussparung (82), die in dem Rad (7) angeordnet ist, aufgenommen ist und eine Drehung des Rades begrenzt, bewegbar ist, wobei der Bremsmechanismus (2) ein Bewegungselement (8) umfasst, um die Bremsstange (4) zwischen den Positionen zu bewegen, wobei das Bewegungselement (8) eine Eingreiffläche aufweist, die schräg zu der Längsachse der Bremsstange (4) angeordnet ist, um mit dem zweiten Ende der Bremsstange (4) zusammenzuwirken, wobei der Bremsmechanismus (2) weiterhin ein Pedal (5) aufweist, um das Bewegungselement (8) zu bewegen, **dadurch gekennzeichnet, dass** das Pedal (5) in Bezug auf das Bewegungselement (8) bewegbar ist, und dass das Pedal (5) zwischen einer freien Position, in der sich der Bremsmechanismus (2) in der freien Position befindet, und ersten und zweiten Bremspositionen, in denen sich der Bremsmechanismus (2) in der Bremsposition befindet, bewegbar ist.

2. Buggy nach Anspruch 1, **dadurch gekennzeichnet, dass** die Bremsstange ein Ausrichtfederelement (41) umfasst, wobei das Ausrichtfederelement (41) angeordnet ist, um zusammengedrückt zu werden, wenn die Bremsstange (4) von der freien Position in die Bremsposition bewegt wird, wenn die Stange (4) nicht mit der Aussparung (82), die in dem Rad (7) angeordnet ist, ausgerichtet ist.

3. Buggy nach Anspruch 2, **dadurch gekennzeichnet, dass** das Ausrichtfederelement (41) zwischen zwei Stangenabschnitten, die in der Bremsstange (4) vorgesehen sind, angeordnet ist.

4. Buggy nach einem der vorangehenden Ansprüche, **dadurch gekennzeichnet, dass** die Eingreiffläche eine Aussparung (82) aufweist, um das zweite Ende der Bremsstange (4) in der Bremsposition aufzunehmen.

5. Buggy nach einem der vorangehenden Ansprüche, **dadurch gekennzeichnet, dass** das Pedal (7) zwischen den ersten und zweiten Bremspositionen bewegbar ist, ohne im Wesentlichen das Bewegungselement (8) zu bewegen.

6. Buggy nach Anspruch 5, **dadurch gekennzeichnet, dass** das Pedal (7) in Richtung auf die zweite Bremsposition vorgespannt ist.

7. Buggy nach einem der vorangehenden Ansprüche, **dadurch gekennzeichnet, dass** eine Bewegung des Pedals (7) von der freien Position in einer ersten Richtung (I) in Richtung auf die erste Bremsposition das Bewegungselement (8) von der freien Position in die Bremsposition bewegt, wobei eine Bewegung des Pedals (7) in einer zweiten Richtung (II) das Pedal (7) von der ersten in die zweite Bremsposition bewegt, und wobei eine weitere Bewegung des Pedals (7) von der zweiten Bremsposition in der zweiten Richtung das Pedal (7) in die freie Position bewegt, wobei das Bewegungselement (8) aus der Bremsposition in die freie Position bewegt wird.

8. Buggy nach einem der vorangehenden Ansprüche, **dadurch gekennzeichnet, dass** das Bewegungselement (8) um eine Drehachse drehbar ist, die parallel zu der Achse der Bremsstange (4) ist, wobei sich die Eingreiffläche auf einem radialen Ort in Bezug auf die Drehachse erstreckt.

9. Buggy nach Anspruch 8, **dadurch gekennzeichnet, dass** das Pedal (7) um die Drehachse des Bewegungselements (8) drehbar ist.

10. Buggy nach einem der vorangehenden Ansprüche 7 bis 9, **dadurch gekennzeichnet, dass** die erste Richtung (I) eine Komponente in der Abwärtsrichtung umfasst und die zweite Richtung (II) eine Komponente in der Aufwärtsrichtung umfasst.

11. Buggy nach einem der vorangehenden Ansprüche, **dadurch gekennzeichnet, dass** das Pedal (7) in der zweiten Bremsposition im Wesentlichen bündig mit dem Rahmen (6) ist.

12. Buggy nach einem der vorangehenden Ansprüche, **dadurch gekennzeichnet, dass** die Bremsstange (4) ein Rücklauffederelement (42) aufweist, um die Bremsstange aus der Bremsposition in die freie Position zurückzubewegen.

## Revendications

1. Poussette (1) comportant un cadre (6) et au moins une roue (7) munie d'un mécanisme de freinage (2), dans laquelle le mécanisme de freinage (2) est manoeuvrable entre une position libre dans laquelle la roue (7) peut tourner et une position de freinage dans laquelle la rotation de la roue (7) est limitée, dans laquelle le mécanisme de freinage (2) comporte une tige de freinage (4) manoeuvrable entre une position libre dans laquelle la tige de freinage (4) est à l'écart de la roue (7) et une position de freinage dans laquelle une première extrémité de la tige de freinage (4) est reçue dans un évidement (82) aménagé dans la roue (7), limitant la rotation de cette roue, dans laquelle le mécanisme de freinage (2) comporte une pièce mobile (8) permettant de déplacer la tige de freinage (4) entre les positions, dans laquelle la pièce mobile (8) comporte une surface d'accouplement orientée obliquement par rapport à l'axe longitudinal de la tige de freinage (4) de façon à s'accoupler à la seconde extrémité de la tige de freinage (4), dans laquelle le mécanisme de freinage (2) comporte en outre une pédale (5) permettant de déplacer la pièce mobile (8), **caractérisé en ce que** la pédale (5) est manoeuvrable par rapport à la pièce mobile (8), et **en ce que** la pédale (5) est manoeuvrable entre une position libre dans laquelle le mécanisme de freinage (2) est dans la position libre, et une première et une seconde position de freinage dans lesquelles le mécanisme de freinage (2) est dans la position de freinage.

2. Poussette selon la revendication 1, dans laquelle la tige de freinage comporte une pièce d'alignement à ressort (41), dans laquelle la pièce d'alignement à ressort (41) est configurée de façon à se comprimer lorsque la tige de freinage (4) est manoeuvrée de la position libre à la position de freinage quand la tige (4) n'est pas alignée avec l'évidement (82) aménagé dans la roue (7).

3. Poussette selon la revendication 2, dans laquelle la pièce d'alignement à ressort (41) est disposée entre deux sections de la tige aménagées dans la tige de freinage (4).

4. Poussette selon l'une quelconque des revendications précédentes, dans laquelle la surface d'accouplement comporte un évidement (82) configuré pour recevoir la seconde extrémité de la tige de freinage (4) dans la position de freinage.

5. Poussette selon l'une quelconque des revendications précédentes, dans laquelle la pédale (7) est manoeuvrable entre la première et la seconde position de freinage, sensiblement sans déplacer la pièce mobile (8).

6. Poussette selon la revendication 5, dans laquelle la pédale (7) est biaisée dans la direction de la seconde position de freinage.

7. Poussette selon l'une quelconque des revendications précédentes, dans laquelle le déplacement de la pédale (7) de la position libre dans une première direction (I) vers la première position de freinage déplace la pièce mobile (8) de la position libre à la position de freinage, dans laquelle le déplacement de la pédale (7) dans une seconde direction (II) déplace la pédale (7) de la position libre à la position de freinage, et dans laquelle un mouvement supplémentaire de la pédale (7) de la seconde position de freinage dans la seconde direction déplace la pédale (7) vers la position libre, déplaçant la pièce mobile (8) de la position de freinage à la position libre.

8. Poussette selon l'une quelconque des revendications précédentes, dans laquelle la pièce mobile (8) peut tourner autour d'un axe de rotation parallèle à l'axe de la tige de freinage (4), dans lequel la surface d'accouplement s'étend sur une position radiale par rapport à l'axe de rotation.

9. Poussette selon la revendication 8, dans laquelle la pédale (7) peut tourner autour de l'axe de rotation de la pièce mobile (8).

10. Poussette selon l'une quelconque des revendications 7 à 9 précédentes, dans laquelle la première direction (I) comporte une composante dans la direction de haut en bas et dans laquelle la seconde direction (II) comporte une composante dans la direction de bas en haut.

11. Poussette selon l'une quelconque des revendications précédentes, dans laquelle la pédale (7) affleure sensiblement le cadre (6) dans la seconde position de freinage.

12. Poussette selon l'une quelconque des revendications précédentes, dans laquelle la tige de freinage (4) comporte une pièce de rappel à ressort (42) permettant de ramener la tige de freinage de la position de freinage à la position libre.
